# EUROPÄISCHE PATENTANMELDUNG

(11) **EP 0 949 443 A2**
(43) Veröffentlichungstag der Anmeldung: **13.10.1999**
(21) Anmeldenummer: 99105931.2
(22) Anmeldetag: 24.03.1999
(51) Int. Cl.: F16L 47/00

(54) **Anbohrvorrichtung für unter Mediendruck stehende Rohrleitungen, insbesondere für Kunststoff-Rohrleitungen**

(30) Priorität: 09.04.1998 DE 19816063
(71) Anmelder: MANIBS Spezialarmaturen GmbH & Co. KG, D-42859 Remscheid (DE)
(72) Erfinder: Hintzen, Werner, Dipl.-Ing., 50765 Köln (DE)
(74) Vertreter: Mentzel, Norbert, Dipl.-Phys.

(57) **Zusammenfassung**

Bei einer Anbohrvorrichtung für unter Mediendruck stehende Rohrleitungen setzt man eine Rohrarmatur (12) an der gewünschten Anbohrstelle, die für den Bohrvorgang einen Rohrstutzen (13) besitzt. Der Rohrstutzen wird mit einer Rohrverlängerung (14) versehen, an welcher dann das Gehäuse des Bohrgeräts (20) befestigt wird. Für eine preiswerte Vorrichtung und eine bequeme Handhabung wird vorgeschlagen, das Gehäuse des Bohrgeräts mit einem als Rohrverschluss wirkenden Stopfen (30) zu versehen, der mit einer Presskolbeneinrichtung ausgerüstet ist. Dieser Stopfen besitzt einen Axialdurchbruch für die Rohrstange und stützt sich über einen Axialanschlag am Stirnende der Rohrverlängerung ab.

## Beschreibung

Die Erfindung richtet sich auf eine Anbohrvorrichtung der im Oberbegriff des Anspruches 1 angegebenen Art. Die bekannten Vorrichtungen sind aufwendig, umständlich in der Handhabung und erfordern verhältnismäßig viel Zeit für das Befestigen und Lösen des Bohrgeräts und zum Anschluss der medienführenden Abzweigleitung.

Der Erfindung liegt die Aufgabe zugrunde die Nachteile der bekannten Vorrichtung zu vermeiden. Dies wird erfindungsgemäß durch die im Kennzeichen des Anspruches angeführten Maßnahmen erreicht, denen folgende besondere Bedeutung zukommt.

Die Erfindung verwendet zur Befestigung des Bohrgeräts in der Vorrichtung einen Stopfen, der als Rohrverschluss in der Rohrverlängerung fungiert. Dadurch ist es möglich, auf die bisherigen kostspieligen und umständlich zu handhabenden Flanschverbindungen zu verzichten. Das Bohrgerät lässt sich nämlich über diesen Stopfen in einem sogenannten "Spitzende" der Rohrverlängerung befestigen. Der Stopfen ist in das Bohrgerät integriert. Wenn der Stopfen als sogenannte Presskolbeneinrichtung ausgebildet ist, setzt er sich im Wirkzustand aufgrund einer radialen Erweiterung der in ihm befindlichen Dichtkörper an der Rohrinnenfläche der Rohrverlängerung fest. Auf diese Weise wird nicht nur die Befestigung des Bohrgeräts erreicht, sondern auch für eine gute Mediendichtigkeit zwischen dem Bohrgerät und der Rohrverlängerung gesorgt. Die erfindungsgemäße Kombination aus Stopfen und Bohrgerät wird erreicht, weil der Stopfen einen Axialdurchbruch aufweist, der von der Bohrstange des Bohrgeräts durchsetzt ist. Die Einstecklage des Stopfens in der Rohrverlängerung wird durch einen Axialanschlag bestimmt.

Weitere Maßnahmen und Vorteile der Erfindung ergeben sich aus den Unteransprüchen, der nachfolgenden Beschreibung und den Zeichnungen. In den Zeichnungen ist die Erfindung in einem Ausführungsbeispiel dargestellt. Es zeigen:
- Fig. 1: die schematische Ansicht einer Rohrleitung mit einer daran gesetzten Armatur und einer Rohrverlängerung, an welcher zunächst ein Bohrgerät und dann eine Abzweigleitung angeschlossen werden sollen und
- Fig. 2: im Ausbruch, ein wesentliches Teilstück des zur erfindungsgemäßen Vorrichtung gehörenden Bohrgeräts im Axialschnitt.

Wenn an einer gewünschten Stelle 11 der Rohrleitung 10 einer medienführenden Rohrleitung 10 eine Abzweigleitung 15 angeschlossen werden soll, wird dort eine Armatur 12 mediendicht befestigt. Diese Armatur 12 besitzt einen Rohrstutzen 13, der zweckmäßigerweise mit einer Rohrverlängerung 14 versehen wird. Sofern die Rohrleitung 10 aus Kunststoff besteht, verwendet man zweckmäßigerweise auch Kunststoff für die Armatur 12 und eine Schmelzverbindung zur Verbindung der Armatur 12 an der gewünschten Rohrstelle 11. In diesem Fall können zur Verbindung des Rohrstutzens 13 und der Rohrverlängerung 14 sogenannte Schweißmuffen 16 verwendet werden.

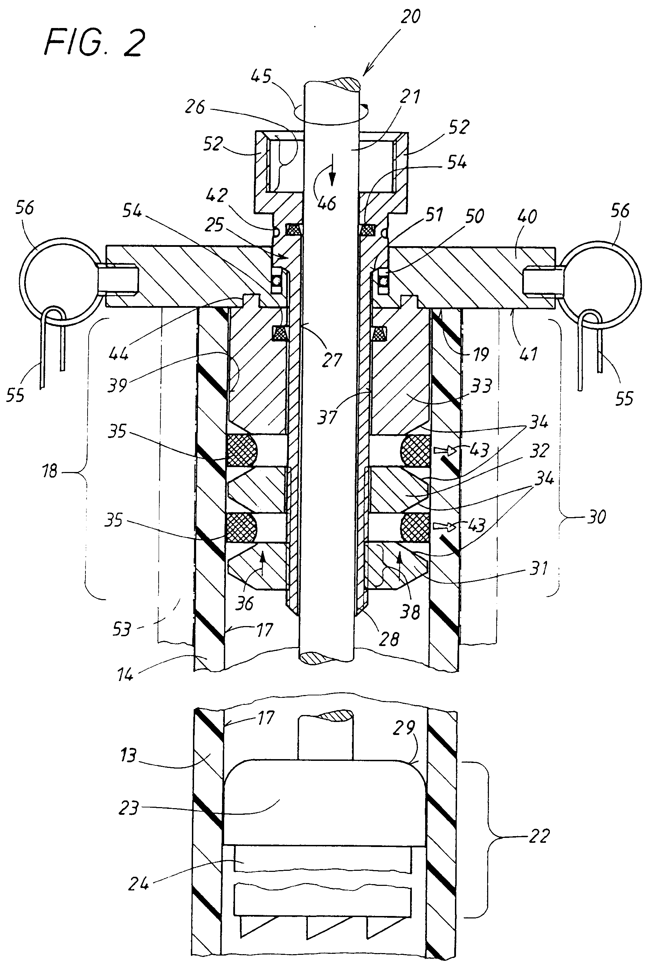

Zur Anbohrung der gewünschten Rohrstelle 11 der Rohrleitung 10 wird ein Bohrgerät 20 genutzt, von welchem in Fig. 2 lediglich die Bohrstange 21 und der als zylindrischer Fräser ausgebildete Bohrer 22 gezeigt sind. Der Bohrer 22 umfasst einen im Gebrauchsfall an der Wandinnenfläche 17 der Rohrverlängerung 14 bzw. des Rohrstutzens 13 entlanggleitenden Führungskopf 23 und eine mit endseitigen Schneidzähnen versehenen Schneidbüchse 24, welche gegenüber dem Durchmesser des Führungskopfs 23 zurückgesetzt ist. Der Führungskopf 23 weist, zwecks leichterer Auszugsbewegung, gerundete oder abgeschrägte Kanten bei 29 auf. Von dem eigentlichen Bohrgehäuse ist in Fig. 2 lediglich eine abgesetzte Hülse 25 gezeigt, an welcher der Rest des Gehäuses im Anbohrfall verbindbar ist. Das geschieht z.B. an der mit 26 gekennzeichneten, ein Innengewinde aufweisenden Kupplungsstelle 26 der Hülse 25. Diese Hülse 25 ist zugleich Bestandteil eines als Presskolbeneinrichtung ausgebildeten Stopfens 30.

Der Stopfen 30 umfasst im dargestellten Ausführungsbeispiel von Fig. 2 drei Kolbenteile, nämlich einen beim Pressen axialbeweglichen Presskolben 31, einen im Gebrauchsfall axialfesten Gegenkolben 33 und einen dazwischen angeordneten Zwischenkolben 32. Zwischen den einzelnen Kolben 31, 32, 33 befinden sich jeweils ringförmige Dichtungskörper 35 mit einem geeigneten Ringinnenprofil, das mit kolbenseitigen, gegeneinander weisenden konischen Steuerflächen 34 zusammenwirkt. Das geschieht, indem man den Presskolben 31 im Sinne der, seine Axialbewegung beim Pressen kennzeichnenden Pfeile 36, an den Gegenkolben 33 heranbewegt. Diese Aufgabe übernimmt die Hülse 34. Der Stopfen 30 besitzt nämlich einen Axialdurchbruch 37, durch welchen die Hülse 35 hindurchgesteckt ist, mit ihrem inneren Hülsenende 28 herausragt und in diesem Endbereich ein Außengewinde für einen Gewindeeingriff 38 des Presskolbens 31 besitzt. Das Hülseninnere 27 dient zur Aufnahme der Bohrstange 21. Der Zwischenkolben 32 und der Gegenkolben 33 sind lose auf der Mantelfläche der Hülse 25 angeordnet.

Zum Stopfen 30 gehört noch eine Radialplatte 40, die über eine zentrierfähige Steckkupplung 44 od. dgl. mit dem Stopfen 30 verbunden ist. Während der Stopfen 30 im Gebrauchsfall in den Endabschnitt 18 der Rohrverlängerung 14 eingesteckt ist und sich dabei mit einer Umfangsfläche 39 des Gegenkolbens 33 führungswirksam abstützt, liegt die Radialplatte 40 mit ihrer einen Plattenseite 41 an der Stirnfläche 39 der Rohrverlängerung 14 an. Diese Plattenseite 41 dient als Axialanschlag für den damit verbundenen Stopfen 30. Das am äußeren Hülsenende 52 bei 26 angeschlossene restliche Bohrgehäuse, die Radialplatte 40 und der Stopfen 30 bilden eine zum eigentlichen Bohrgerät 20 gehörende Baueinheit, die in folgender Weise an der Rohrverlängerung 14 positioniert wird.

Die aus Fig. 2 ersichtlichen Bauteile werden zunächst in dem Endabschnitt 18 der die Rohrverlängerung 14 eingesteckt. Dann wird die Presskolbeneinrichtung des Stopfens 30 wirksam gesetzt. Dies geschieht indem man die Hülse 25 drehbewegt. Dazu dienen Angriffsstellen 42 für geeignete Drehhandhaben am äußeren Hülsenende 52. Beim Drehen der Hülse 25 im Spannsinne wird der Presskolben 31 in Richtung der bereits erwähnten Pfeile 36 gegenüber dem durch die abgestützte Radialplatte 40 ruhenden Gegenkolben 33 axialbewegt. Dadurch weiten sich die Dichtkörper 35 radial aus und üben einen im Sinne der Kraftpfeile 43 wirkende Pressung an der Wandinnenfläche 17 der Rohrverlängerung 14 aus. Die Hülse 25 ist, wie bereits erwähnt wurde, abgesetzt und stützt sich mit einer Schulter 21 über ein Kugellager 50 od. dgl. an der Radialplatte 40 axial ab. Damit sich bei der radialen Verspannung die Rohrverlängerung 14 nicht deformiert kann man eine strichpunktiert, in Fig. 2 verdeutlichte, Verstärkungsbuchse 53 überschieben.

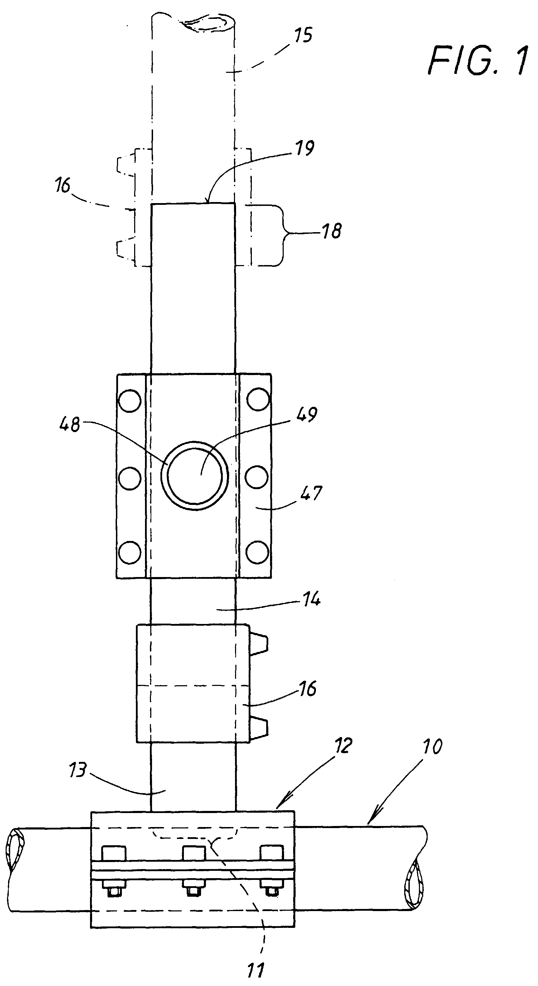

Das Gehäuse des Bohrgeräts 20 wird so festgesetzt und es kommt zu einem mediendichten Abschluss zwischen dem Stopfen 30 und der Rohrverlängerung 14. Damit ist das Bohrgerät 20 mit seinem Restgehäuse fest an der Rohrverlängerung 14 angeordnet. Durch entsprechende Entspannung der Presskolbeneinrichtung vom Stopfen 30 lässt sich das Bohrgerät 20 schnell und bequem wieder von der Rohrverlängerung 14 lösen. Nach der aus Fig. 2 ersichtlichen Befestigung des Bohrgeräts 20 über den damit integrierten Stopfen 30 kann dann die Bohrarbeit an der bereits mehrfach erwähnten Bohrstelle 11 ausgeführt werden. Dies geschieht, indem man die Bohrstange 21 durch ein nicht näher gezeigtes Getriebe einem Rotationstrieb 45 und einem zweckmäßigerweise damit abgestimmten Axialtrieb 46 im Sinne der Pfeile von Fig. 2 aussetzt. Nach dem Anbohren steht die Rohrverlängerung 14 zwar unter Mediendruck, doch sorgt der gesetzte Stopfen 30 für keinen Medienaustritt an der Befestigungsstelle des Bohrgeräts 20. Damit der Stopfen 30 auch bei sehr hohem Mediendruck sitzen bleibt, kann seine Position durch aus Fig. 2 ersichtliche Spannbänder 55 gesichert werden. Diese greifen an Ringösen 56 an, die sich an der Peripherie der Radialplatte 40 befinden können. Für die weitere Handhabung können bedarfsweise noch folgende weitere, aus der Fig. 1 ersichtliche, Maßnahmen herangezogen werden.

Um das Bohrgerät 20 entfernen zu können empfiehlt es sich, die Rohrverlängerung 14 zeitweise abzusperren. Dies könnte z.B. durch eine Klemmeinrichtung geschehen, welche die aus flexiblem Kunststoff bestehende Rohrwand der Rohrverlängerung 14 zusammenquetscht. Alternativ könnte man hier einen durch Schweißverbindungen in die Rohrverlängerung 14 oder in den Rohrstutzen 13 integrierten Absperrhahn vorsehen, z.B. einen Kugelhahn. Die Fig. 1 zeigt eine Absperrung über ein sogenanntes Blasensetzgerät. Dazu integriert man, zweckmäßigerweise ebenfalls über eine Schweißverbindung bei schweißfähigem Kunststoffmaterial, eine sogenannte Sperrblasenarmatur 47 in die Rohrverlängerung 14. Diese besitzt einen Rohranschluss 48 für ein nicht näher gezeigtes, an sich bekanntes Blasensetzgerät, welches über Absperrschieber am Rohranschluss 48 sitzt. Der Rohranschluss 48 ist mit dem Rohrinneren der Rohrverlängerung 14 in Verbindung, weshalb durch die aus Fig. 1 ersichtliche Rohröffnung 49 die Absperrblase des Blasensetzgerät hindurchgeführt werden kann. Beim Wirksamsetzen der Absperrblase wird das Innere der Rohrverlängerung 14 abgedichtet. Dann kann das Bohrgerät 20 mit seinem Stopfen 30 demontiert werden. Dann ist es möglich ans Ende 18 der Rohrverlängerung 14 die aus Fig. 1 ersichtliche Abzweigleitung 15 anzuschließen. Das kann wieder über eine weitere Schweißmuffe 16 geschehen.

Bei Verwendung des Blasensetzgeräts zur zeitweiligen Absperrung der Rohrverlängerung 14 wird nach dem Anschluss der Abzweigleitung 15 die Absperrblase zunächst unwirksam gesetzt und dann aus der Rohröffnung 49 der Absperrarmatur 47 herausgezogen, bis die dort zunächst noch befindliche Absperrarmatur die Rohröffnung 49 verschließt. Dann wird die Rohröffnung 49, wieder durch kurzzeitiges Öffnen der Absperrarmatur, mit einem Rohrverschluss abgedichtet. Dann kann diese Absperrarmatur und das Blasensetzgerät demontiert werden. An der Sperrblasenarmatur 47 sitzt dann nur der preiswerte Verschluss im dortigen Anschlussrohr 48.

### Bezugszeichenliste:

- 10: Rohrleitung
- 11: Bohrstelle an 10
- 12: Armatur
- 13: Rohrstutzen an 12
- 14: Rohrverlängerung von 13
- 15: Abzweigleitung an 14
- 16: Schweißmuffe zwischen 13, 14 bzw. 14, 15
- 17: Wandinnenfläche von 13 bzw. 14
- 18: Endabschnitt von 14
- 19: Stirnende von 14
- 20: Bohrgerät
- 21: Bohrstange von 20
- 22: Bohrer an 21
- 23: Führungskopf von 22
- 24: Schneidbüchse von 22
- 25: Hülse für 20
- 26: Kupplungsstelle für Bohrergehäuse, äußeres Hülsenende
- 27: Hülseninneres von 25
- 28: inneres Hülsenende von 25
- 29: gerundete Kanten an 23
- 30: Stopfen, Presskolbeneinrichtung
- 31: Presskolben von 30
- 32: Zwischenkolben von 30
- 33: Gegenkolben von 30
- 34: konische Steuerfläche von 31, 32, 33
- 35: ringförmiger Dichtungskörper von 30
- 36: Axialbewegungspfeil von 31
- 37: Axialdurchbruch in 30
- 38: Gewindeeingriff zwischen 31, 28
- 39: Umfangsfläche von 33
- 40: Radialplatte an 30
- 41: untere Plattenseite von 40, Axialanschlag
- 42: Angriffsstelle an 25 für Drehhandhabe
- 43: radiale Anpresskraft von 35
- 44: Steckkupplung zwischen 40, 30
- 45: Rotationsantrieb von 21
- 46: Axialantrieb von 21
- 47: Sperrblasenarmatur
- 48: Anschlussrohr an 47
- 49: Rohröffnung von 48
- 50: Wälzlager, Kugellager
- 51: Schulter an 25
- 52: äußeres Hülsenende von 25
- 53: Verstärkungsbuchse bei 18
- 54: ringförmige Dichtung zwischen 21, 27; 37, 33
- 55: Spannband
- 56: Ringöse

## Patentansprüche

1. Anbohrvorrichtung für unter Mediendruck stehende Rohrleitungen (10), insbesondere für Kunststoff-Rohrleitungen (10),
mit einem Bohrgerät (20), das ein Gehäuse mit einem Dreh- und Vorschubgetriebe (46, 47) für eine Bohrstange (21) aufweist und am inneren Stangenende einen Bohrer (22) bzw. Fräser besitzt
mit einer an der gewünschten anzubohrenden Stelle (11) der Rohrleitung (10) befestigbaren Armatur (12),
mit einem Rohrstutzen (13) an der Armatur (12), der sowohl zum Anbohren der Rohrleitung (10) als auch zum Abzweigen des aus der Rohrleitung (10) kommenden Mediums dient,
mit einer Rohrverlängerung (14) am Rohrstutzen (13), die ggf. mediendicht absperrbar ist,
wobei am Ende (18) der Rohrverlängerung (14) zum Anbohren das Gehäuse des Bohrgeräts (20) und ggf. nach dem Bohren eine medienführende Abzweigleitung (15) angeschlossen werden,
**dadurch gekennzeichnet,**
dass das Gehäuse des Bohrgeräts (20) mit einem als Rohrverschluss der Rohrverlängerung dienenden Stopfen (30) versehen ist,
dass dieser Stopfen (30) als eine Presskolbeneinrichtung ausgebildet ist, die wenigstens einen bei einer axialen Verspannung der Einrichtung sich radial erweiternden (43) Dichtkörper (35) besitzt,
dass der Stopfen (30) einen Axialdurchbruch (37) aufweist, der von der Bohrstange (21) durchsetzt ist,
und dass der Stopfen (30) mit einem Axialanschlag (41) versehen ist, der sich an der Rohrverlängerung (14) abstützt.

2. Vorrichtung nach Anspruch 1, dadurch gekennzeichnet, dass der Stopfen (30) mit einer Radialplatte (40) versehen ist, deren Unterseite (41) den Axialanschlag bildet und sich am Stirnende (19) der Rohrverlängerung (14) abstützt.

3. Vorrichtung nach Anspruch 1 oder 2, dadurch gekennzeichnet, dass die Presskolbeneinrichtung des Stopfens einen axialbeweglichen Presskolben (31), einen axialfesten Gegenkolben (33) und ggf. einen oder mehrere lose dazwischen angeordneten Zwischenkolben (32) umfasst,
und dass diese Kolben (31, 32, 33) gegeneinander weisende konische Steuerflächen (34) für jeweils einen zwischen ihnen angeordneten Dichtkörper (35) haben.

4. Vorrichtung nach einem oder mehreren der Ansprüche 1 bis 3, dadurch gekennzeichnet, dass im Axialdurchbruch (37) des Stopfens (30) und gegebenenfalls seiner Radialplatte (40) eine Hülse (25) sitzt, deren Hülseninneres (28) zur Durchführung der Bohrstange (21) dient,
dass die Hülse (25) zwar axialfest aber drehbar im Stopfen (30) bzw. in dessen Radialplatte (40) gelagert ist und an ihrem äußeren Hülsenende (52) drehbetätigbar (42) ist,
dass der Presskolben (31) am inneren Hülsenende (27) sitzt und die Hülse ein Außengewinde (38) zum Verschrauben des Presskolbens (31) aufweist.

5. Vorrichtung nach Anspruch 4, dadurch gekennzeichnet, dass die Drehlagerstelle der Hülse (25) im Stopfen (30) bzw. in dessen Radialplatte (40) ein Wälzlager (50) ist.

6. Vorrichtung nach einem oder mehreren der Ansprüche 1 bis 5, dadurch gekennzeichnet, dass der Gegenkolben (33) im freien Endabschnitt (18) der Rohrverlängerung (14) angeordnet ist und Führungsflächen (39) aufweist, die im Einsteckfall des Stopfens (30) an der Wandinnenfläche (17) der Rohrverlängerung (14) anliegen.

7. Vorrichtung nach einem oder mehreren der Ansprüche 1 bis 6, dadurch gekennzeichnet, dass der freie Endabschnitt (18) der Rohrverlängerung (14) im Bereich der Presskolbeneinrichtung von einer Verstärkungsbuchse (53) ummantelt ist, die vorzugsweise lösbar ist.

8. Vorrichtung nach einem oder mehreren der Ansprüche 1 bis 7, dadurch gekennzeichnet, dass elastische Dichtungen (54) , insbesondere in Form einer Lippenring-Dichtung, zwischen der Bohrstange (21) und der Hülseninnenfläche (27) und/oder zwischen der Hülsenaußenfläche und dem Stopfen (30) angeordnet sind.

9. Vorrichtung nach einem oder mehreren der Ansprüche 1 bis 8, dadurch gekennzeichnet, dass die Radialplatte (40) mit dem Stopfen (30), bzw. mit dem ruhenden Gegenkolben (33) seiner Presskolbeneinrichtung, durch eine insbesondere zentrierfähige Steckverbindung (44) gekuppelt ist.

10. Vorrichtung nach einem oder mehreren der Ansprüche 1 bis 9, dadurch gekennzeichnet, dass die Einstecklage des Stopfens (30) im Endabschnitt (18) der Rohrverlängerung (14) zusätzlich durch ein Spannband (55) gesichert ist

11. Vorrichtung nach Anspruch 10, dadurch gekennzeichnet, dass die Spannbänder (55) an der Radialplatte (40) des Stopfens (30) angreifen.

12. Vorrichtung nach einem oder mehreren der Ansprüche 1 bis 11, dadurch gekennzeichnet, dass an Stelle eines Bohrgeräts (20) mit der Bohrstange (21) und dem Bohrer (22) ein Lochungsgerät mit einer Druckstange und einem Stanzer, insbesondere in Form eines Schmelzstanzers, verwendet wird.
